# FASCICULE DE BREVET EUROPEEN

(11) **EP 0 695 280 B1**
(45) Date de publication et mention de la délivrance du brevet: **12.03.1997**
(21) Numéro de dépôt: 94913653.5
(22) Date de dépôt: 15.04.1994
(51) Int. Cl.: C03B 5/00, C03B 5/12, C03B 3/02, C03B 5/02, F23G 5/02, B09B 3/00, F27D 3/00, F27B 3/00, F27B 1/00

(54) **DISPOSITIF DE TRAITEMENT ET DE VITRIFICATION DE DECHETS**
VORRICHTUNG ZUM BEARBEITEN UND ZUM VERGLASEN VON ABFäLLE
DEVICE FOR PROCESSING AND VITRIFYING WASTE

(30) Priorité: 16.04.1993 FR 9304509
(43) Date de publication de la demande: 07.02.1996
(73) Titulaire: ELECTRICITE DE FRANCE Service National, 75008 Paris (FR)
(72) Inventeur: LIAGRE, François, F-94170 Le Perreux (FR); BOURDIL, Claude, F-78500 Sartrouville (FR); BROCHOT, Jean-Marie, F-69002 Lyon (FR); BOZETTO, Pierre, F-69450 Saint-Cyr-au-Mont-d'Or (FR); CABARDI, Jean, F-01700 Miribel (FR); ENSUQUE, Alain, F-69340 Francheville (FR)
(74) Mandataire: Texier, Christian
(86) Numéro de dépôt international: FR9400426
(87) Numéro de publication internationale: WO9424060

(56) Documents cités:
- EP-A- 0 035 850
- EP-A- 0 137 881
- EP-A- 0 312 044
- WO-A-87/06926
- WO-A-93/01141
- WO-A-93/02974
- FR-A- 2 692 178
- US-A- 2 527 144
- US-A- 2 636 723
- US-A- 4 113 459

## Description

La présente invention concerne un dispositif de traitement de déchets, destiné plus particulièrement mais non exclusivement au traitement de déchets hospitaliers.

De façon générale, les déchets hospitaliers sont constitués par une grande variété de matériaux solides ou liquides (verrerie, aiguilles, scalpels, substances chimiques, tissus biologiques, ...) susceptibles d'être biologiquement contaminés ou toxiques et dont la manutention impose la prise de précautions particulières, notamment un double conditionnement des déchets. Les déchets hospitaliers ainsi conditionnés forment des lots qui contiennent de fortes proportions de matières volatiles et qui présentent un pouvoir calorifique inférieur moyen (PCI), de valeur relativement élevée (14 600 kJ/kg). Ce pouvoir calorifique est toutefois très variable et peut atteindre des valeurs extrêmes de 4 200 kJ/kg et 29 000 kJ/kg. Le traitement des déchets hospitaliers est soumis par ailleurs à une réglementation qui impose une courte durée de stockage des lots de déchets sur le lieu d'incinération et par mesure d'hygiène, les déchets ne peuvent pas être sortis de leur conditionnement avant incinération en vue de constituer des lots calorifiques homogènes. On est donc conduit lors de l'incinération de déchets hospitaliers à traiter une succession de lots dont le pouvoir calorifique est variable et non connu avec précision puisque dans la pratique, il est impossible au personnel chargé de l'incinération des déchets de connaître le contenu détaillé des lots.

On connaît des incinérateurs, utilisés pour la destruction des ordures ménagères, dans lesquels la combustion des déchets s'effectue dans un foyer équipé d'une grille sur laquelle sont déposés les déchets et sous laquelle de l'air est injecté pour activer la combustion. Ces incinérateurs connus sont mal adaptés à la destruction des déchets hospitaliers, d'une part en raison du risque d'écoulement de liquides biologiquement contaminés sous la grille ou de fusion de matières susceptibles de colmater cette dernière et d'autre part parce que les températures maximales atteintes dans ces incinérateurs sont inférieures aux températures de fusion des aciers, de sorte que les objets métalliques contenus dans les déchets, par exemple des aiguilles ou des scalpels, restent identifiables après traitement.

On a proposé dans le brevet FR 1 394 418 un dispositif de traitement comportant une chambre de gazéification où sont introduits les déchets pour y subir un dégazage et une combustion, une chambre de post-combustion des gaz issus de la chambre de gazéification et une chambre de fusion où les scories provenant de la chambre de gazéification sont fondues en vue de leur vitrification. Dans ce dispositif, la chambre de gazéification comporte une grille sous laquelle sont dirigés des comburants dont le débit est réglé de manière à ce que les composants organiques des rebuts soient totalement brûlés, avant l'envoi des rebuts dans la chambre de fusion. Des comburants et combustibles sont insufflés dans celle-ci de façon à réaliser dans la chambre de fusion des flammes dont l'action de réduction est plus ou moins forte pour réduire le cas échéant les oxydes métalliques et récupérer le métal. Ce dispositif connu permet de produire à partir de déchets des résidus utilisables sous forme de granules ou de pièces moulées. Toutefois, il consomme des quantités importantes de comburants et d'énergie pour brûler totalement les rebuts avant l'envoi dans la chambre de fusion et réduire les oxydes métalliques. En outre, les comburants utilisés en large excès augmentent d'autant le débit des gaz quittant le dispositif et le coût de leur traitement de dépollution.

La présente invention a pour objet un dispositif de traitement de déchets, notamment de déchets hospitaliers, qui permette un bon contrôle de la combustion des déchets ainsi qu'une transformation de ceux-ci en résidus solides vitrifiés inertes, susceptibles d'être valorisés par la suite, tout en évitant une consommation d'énergie excessive et un coût global de l'installation rédhibitoire.

La présente invention y parvient grâce à un dispositif de traitement de déchets, notamment de déchets hospitaliers, comportant une chambre de gazéification où sont introduits les déchets pour y subir un dégazage et une combustion, une chambre de post-combustion des gaz issus de la chambre de gazéification et une chambre de fusion où les scories provenant de la chambre de gazéification sont exposées à une haute température en vue de leur vitrification, des moyens pour injecter de l'air dans la chambre de gazéification et dans la chambre de post-combustion des gaz, la chambre de gazéification surplombant la chambre de fusion de sorte que les scories descendent par gravité dans cette dernière pour être soumises à la fusion, caractérisé en ce qu'il comporte des moyens pour mesurer la température et la pression dans la chambre de gazéification (1) et réguler en fonction de la température et de la pression mesurées le débit d'air injecté dans la chambre de gazéification de sorte que celui-ci soit adapté au pouvoir calorifique des déchets en cours de traitement et que le taux d'imbrûlés des scories introduites dans la chambre de fusion soit compris entre 3 % et 10 %.

On réalise ainsi, contrairement aux dispositifs connus, une combustion contrôlée et incomplète des déchets dans la chambre de gazéification, ce qui permet de réduire la consommation d'énergie et la quantité d'air injecté par rapport aux dispositifs connus. On peut néanmoins récupérer des produits de vitrification à faible teneur en imbrûlés. On obtient notamment un taux d'imbrûlés inférieur à 0,1% lorsque la température régnant dans la chambre de fusion est avantageusement de l'ordre de 1600°C et de préférence obtenue au moyen d'une torche à plasma. Par une régulation appropriée du débit d'air, on peut envoyer en défaut l'air dans la chambre de gazéification lors du début de la combustion des déchets et éviter que les constituants les plus combustibles et les plus volatiles (plastiques, alcools, ...) ne s'enflamment et en brûlant provoquent un emballement incontrôlable de la combustion. Ensuite, après élimination des constituants volatiles, on peut activer la combustion en augmentant le débit d'air. Ce dernier demeure ainsi adapté au pouvoir calorifique des déchets en cours de traitement et permet d'éviter l'apparation de bouffées de gaz intempestives. En régulant également le débit d'air injecté dans la chambre de post-combustion on peut obtenir un débit total de gaz quittant le dispositif vers les installations de traitement et/ou de récupération de chaleur sensiblement constant. Finalement toute consommation énergétique excessive est évitée et le côut des installations de traitement des gaz en aval est réduit.

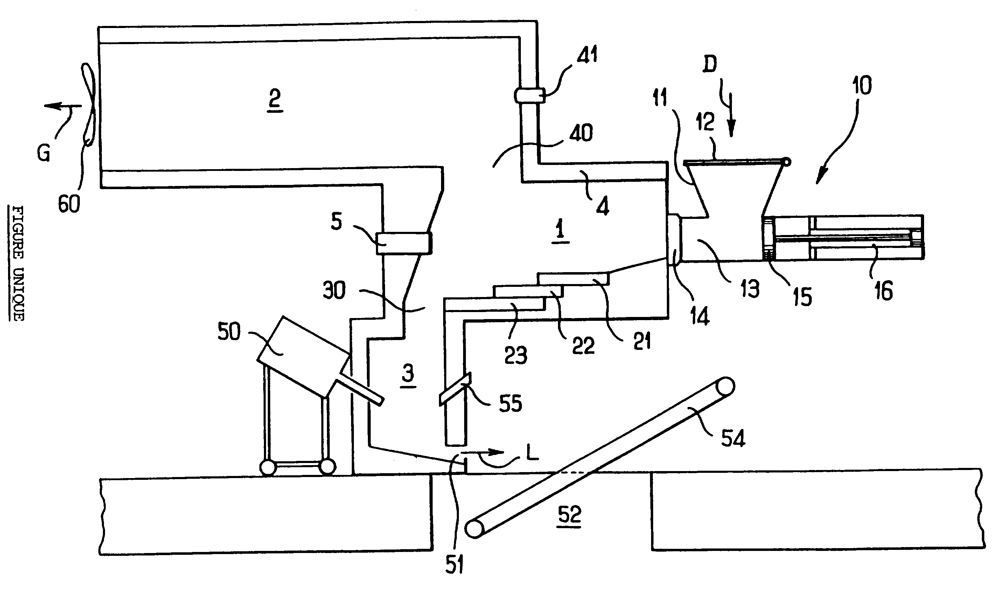

D'autres caractéristiques et avantages de la présente invention apparaîtront à la lecture de la description qui suit, d'un exemple de réalisation non limitatif de l'invention et à l'examen du dessin annexé qui représente de façon schématique et partielle un dispositif de traitement conforme à l'invention.

Ce dispositif de traitement comporte une chambre de gazéification 1 où sont introduits les déchets pour y subir un dégazage et une combustion, une chambre de post-combustion 2 des gaz issus de la chambre de gazéification 1 et une chambre de fusion 3 où les scories provenant de la chambre de gazéification 1 sont exposées à une haute température en vue de leur vitrification.

Plus particulièrement, l'introduction des déchets dans la chambre de gazéification 1 se fait selon la flèche D au moyen d'un dispositif de chargement 10 permettant de recharger fréquemment (par exemple une dizaine de fois par heure) et de façon régulière la chambre de gazéification 1 sans entrée d'air parasite dans celle-ci, comportant une trémie 11 munie d'un couvercle 12 de fermeture. La trémie 11 conduit à un sas de réception 13 équipé d'une porte 14 d'accès à la chambre de gazéification 1. Un poussoir 15, actionné par un mécanisme à vérin 16, est adapté à pousser dans la chambre de gazéification 1 les déchets déposés dans le sas 13 lorsque la porte 14 est ouverte et le couvercle 12 fermé. De préférence, la porte 14 est montée à coulissement vertical et actionnée par vérin. A titre indicatif, elle est associée, dans l'exemple de réalisation décrit, à une ouverture rectangulaire de dimensions 1,5 x 1,6 m de la chambre de gazéification 1.

La chambre de gazéification 1 présente une forme générale allongée selon un axe horizontal et une section transversale rectangulaire. La porte 14 débouche sur une face d'extrémité de la chambre de gazéification 1, dite face avant et située à droite sur le dessin. A titre indicatif, la longueur de la chambre de gazéification 1 vaut 9 m dans l'exemple de réalisation décrit et son volume intérieur 57 m³, ce qui permet de traiter 2 t/h environ de déchets. La chambre de gazéification 1 est garnie intérieurement de matériaux réfractaires, de façon connue en soi. A titre indicatif, dans l'exemple de réalisation décrit, la paroi 4 de la chambre de gazéification 1 est constituée par une tôle en acier de 10 mm d'épaisseur garnie intérieurement de matériaux réfractaires sur une épaisseur de 22 cm. La chambre de gazéification 1 comporte sur sa surface interne inférieure des soles réfractaires agencées en escalier et plus particulièrement, dans l'exemple de réalisation décrit, la chambre de gazéification 1 comporte une première sole 21, proche de la porte 14 puis une deuxième 22 et troisième 23 soles placées de façon étagée en éloignement de la porte 14 en deçà de la première 21. Dans l'exemple de réalisation décrit les soles sont des dalles de 2,5 m de côté environ. Bien entendu, on peut proposer, selon la quantité de déchets à traiter, d'allonger ou de raccourcir la chambre de gazéification 1, en modifiant au besoin le nombre de soles de façon à jouer sur le temps de séjour des déchets. De préférence, comme représenté, le niveau inférieur du sas 13 servant au chargement des déchets se situe à la même hauteur ou à une hauteur légèrement supérieure à celui de la première sole 21 de sorte que lors du chargement, les déchets nouvellement enfournés poussent les déchets en cours de combustion sur la première sole 21, sans les recouvrir et donc sans étouffer le feu. Les déchets qui séjournent sur la première sole 21 subissent un dégazage et les liquides et matériaux à bas points d'ébullition contenus dans les déchets s'évaporent. Un brûleur primaire, connu en lui-même et non représenté est placé au voisinage de la première sole 21 pour enflammer le premier chargement et ne fonctionne en général que quelques minutes en début d'utilisation du dispositif. Le fond de la chambre de gazéification 1, situé à l'opposé de la porte 14, est équipé d'un brûleur 5 destiné à soutenir en cas de besoin la combustion dans la chambre de gazéification 1, de sorte que la température dans celle-ci reste comprise entre 600 et 900°C. Le fond de la chambre de gazéification 1 est équipé d'une porte non représentée utilisée lors de l'entretien du dispositif de traitement.

De l'air de combustion est distribué dans la chambre de gazéification 1 par des ouvertures latérales réparties sur sa longueur au niveau des soles. Cet air de combustion est produit par un ventilateur connu en lui-même et non représenté et des moyens de régulation sont prévus pour agir notamment sur le débit d'air injecté dans la chambre de gazéification 1, encore appelé air primaire, comme cela sera précisé dans la suite.

La chambre de gazéification 1 est équipée de pulvérisateurs d'eau destinés à refroidir la chambre en cas de température excessive à l'intérieur de celle-ci, par exemple supérieure à 1000°C.

Lorsque les déchets arrivent à l'extrémité arrière de la première sole 21, c'est-à-dire l'extrémité située à gauche sur le dessin, ils tombent sur la deuxième 22 située plus bas puis sur la troisième 23. La chute des déchets sur la sole inférieure favorise la dispersion et le retournement de ceux-ci, donc leur aération et leur combustion.

Des poussoirs en matériau réfractaire connus en eux-mêmes et non représentés (encore appelés ringards), actionnés périodiquement par vérins (toutes les 3 à 10 minutes par exemple selon la capacité de traitement de l'installation), sont montés entre les soles dans l'axe de la chambre de gazéification 1 pour pousser horizontalement les déchets en éloignement de la porte 14, c'est-à-dire vers le fond de la chambre de gazéification 1, situé à gauche sur le dessin. Ces poussoirs servent également au nettoyage des soles. auquel cas ils sont avancés au maximum.

La chambre de gazéification 1 surplombe la chambre de fusion 3 et les scories résultant de la combustion des déchets dans la chambre de gazéification 1 quittent la dernière sole, c'est-à-dire dans l'exemple de réalisation décrit la troisième sole 23 par un passage vertical ou puits 30 pour tomber dans la chambre de fusion 3 où ils subissent l'action d'une torche à plasma 50 connue en elle-même.

Les gaz issus principalement du dégazage des déchets dans la chambre de gazéification 1 (et dans une moindre mesure de la chambre de fusion 3) quittent la chambre de gazéification 1 vers le haut par un passage 40 situé dans l'exemple de réalisation décrit sensiblement au-dessus de la troisième sole 23, conduisant à la chambre de post-combustion des gaz 2. La paroi de fond de la chambre de gazéification 1, reliant le puits 30 et le passage 40 est inclinée vers le haut et vers l'avant, c'est-à-dire vers la droite sur le dessin. La chambre de post-combustion 2 présente une forme allongée selon un axe horizontal et les gaz sont admis de préférence de façon excentrée par rapport à cet axe pour leur conférer un mouvement hélicoïdal dans la chambre 2. La chambre de post-combustion 2 surplomble la chambre de gazéification 1 et comporte des ouvertures latérales d'admission d'air de combustion, dit air secondaire. Cet air est injecté dans la chambre de combusion 2 avec une orientation également choisie de façon à conférer à l'ensemble des gaz un mouvement hélicoïdal, favorisant le mélange intime de l'air secondaire et des gaz provenant de la chambre de gazéification 1. La chambre de post-combustion 2 est équipée d'un brûleur secondaire 41 actionné si nécessaire pour maintenir la température de cette chambre à une valeur supérieure à 850°C, de préférence comprise entre 850 et 1200°C. Les gaz de combustion chauds et complètement brûlés quittent la chambre de post-combustion 2 selon la flèche G aspirés par un ventilateur 60 dont le débit d'aspiration est réglé de façon à maintenir une légère dépression dans la chambre de post-d'aspiration est réglé de combustion 2 et dans la chambre de gazéification 1. Les gaz brûlés aspirés par ce ventilateur sont envoyés vers une chaudière de récupération de chaleur et/ou vers un traitement physique ou chimique des gaz, visant à éliminer les composés toxiques (chlore, métaux lourds, poussières, ...) contenus dans ceux-ci.

De préférence, l'air primaire et l'air secondaire sont produits au moyen d'un ventilateur unique équipé de volets de distribution permettant de régler la répartition de l'air envoyé dans la chambre de gazéification 1 et dans la chambre de post-combustion des gaz 2, tout en maintenant un débit total d'air injecté dans ces deux chambres adapté au pouvoir calorifique des déchets en cours de traitement.

La chambre de fusion 3 se présente dans l'exemple de réalisation décrit sous la forme d'un creuset (encore appelé poche) garni de matériaux réfractaires, généralement cylindrique autour d'un axe vertical, équipé de la torche à plasma 50 précitée ou de tout autre dispositif équivalent connu de l'homme de métier (arc électrique, électrobrûleur, oxybrûleur, ...). La chambre de fusion 3 est équipée d'un brûleur d'appoint 55 destiné à assurer la chauffe initiale et à éviter un refroidissement trop important de la chambre de fusion en l'absence du fonctionnement de la torche 50. Ce brûleur est escamotable et rétracté lors du fonctionnement de la torche.

La température régnant dans la chambre de fusion 3 est contrôlée par un pyromètre optique et elle est maintenue à une valeur de consigne (de préférence 1600°C) en modulant la puissance de la torche 50.

Sous l'action de la chaleur générée par la torche à plasma 50, les scories déversées dans la chambre de fusion 3 fondent et forment un bain de fusion. Un orifice 51 est ménagé à la base de la chambre de fusion 3 pour permettre l'évacuation selon la flèche L du bain de fusion vers un bac 52 rempli d'eau, formant bain de trempe, où le bain de fusion déversé subit un refroidissement brutal et se fragmente en formant des produits de vitrification. On peut naturellement proposer, sans sortir du cadre de la présente invention, d'effectuer le refroidissement du bain de fusion 3 par tout autre moyen connu de l'homme de métier, par exemple un refroidissement à l'air.

L'orifice 51 est équipé d'un obturateur connu en lui-même, actionné par vérin et non représenté, commandé pour déverser de façon cyclique le bain de fusion dans le bac de trempe. En variante, l'orifice 51 peut être libre et situé en hauteur par rapport au fond du creuset de sorte que l'évacuation du bain de fusion se fait en continu par débordement.

Les dimensions de la chambre de fusion sont déterminées par le volume des scories déversées dans celle-ci, qui représente environ 10 à 15 % du volume des déchets entrant.

L'extraction des produits de vitrification hors du bac de trempe 52 s'effectue par tout moyen approprié connu de l'homme de métier, par exemple au moyen d'un convoyeur à godets 54.

Le fonctionnement du dispositif de traitement conforme à l'invention est le suivant.

Le couvercle 12 de la trémie 11 est ouvert et les déchets hospitaliers conditionnés dans des conteneurs en matériau combustible sont versés dans le sas 13. Le couvercle 12 est refermé, la porte 14 ouverte et le mécanisme à vérin 16 actionné pour entraîner le poussoir 15 vers la porte 14 et chasser les déchets contenus dans le sas 13 à l'intérieur de la chambre de gazéification 1. Le poussoir 15 est ensuite reculé, la porte 14 refermée et un cycle d'incinération des déchets commence.

Ce cycle débute par une phase de dégazage qui se déroule au niveau de la première sole 21 et pendant laquelle l'air de combustion est envoyé en défaut dans la chambre de gazéification 1 afin d'éviter que les constituants les plus combustibles et les plus volatils (plastiques, alcools, ...) s'enflamment et en brûlant trop rapidement provoquent un emballement incontrôlable de la combustion. La température régnant dans la chambre de gazéification est comprise entre 600 et 900 °C. De préférence, le débit d'air primaire correspond à 30 % environ du débit d'air total et le débit d'air secondaire correspond à 70 % environ. Après quelques minutes, les constituants volatils ayant été éliminés, la combustion est activée en augmentant, par action sur les volets précités, le débit d'air primaire pour provoquer une combustion normale. Le débit d'air primaire atteint alors de préférence 50 % du débit d'air total mais demeure régulé en fonction de la température et de la dépression mesurée dans la chambre de gazéification 1 et en sortie de la chambre de post-combustion des gaz 2. Le débit d'air secondaire est réduit corrélativement à 50 %. En cas de début d'emballement de combustion, les moyens de régulation détectent une augmentation rapide de la pression dans la chambre de gazéification 1 et réduisent le débit d'air primaire injecté dans la chambre de gazéification. Les pulvérisateurs d'eau sont automatiquement actionnés si la température ou la pression atteignent des valeurs excessives. Ces diverses actions de régulation permettent de contrôler le dégazage et la combustion en évitant l'apparition de bouffées de gaz intempestives, de sorte que le débit de gaz quittant le dispositif vers les installations de traitement et/ou de récupération de chaleur est sensiblement constant.

Les déchets en combustion situés sur la première sole 21 sont repoussés en éloignement de la porte 14 lors du chargement suivant et tombent sur la seconde sole 22. Le débit d'air injecté au niveau de cette deuxième sole 22 et de la suivante 23 est régulé de manière à assurer une combustion quasi-complète des déchets organiques à ce niveau. Périodiquement, les poussoirs réfractaires situés entre les soles sont actionnés pour déplacer les déchets vers le fond de la chambre de gazéification 1. Les déchets ainsi repoussés de sole en sole se transforment en scories et tombent finalement dans la chambre de fusion 3 par le puits 30. De préférence, la température des scories lorsqu'elles sont introduites dans la chambre de fusion est supérieure à 800°C. Pour éviter des entraînements de poussières par les gaz sortant de la chambre de fusion 3, le fonctionnement de la torche 50 est de préférence interrompu lors de l'avancée du poussoir équipant la dernière sole et provoquant la chute des scories. Les scories tombent dans le bain en fusion, commencent à fondre et la torche est remise en marche afin de terminer la fusion. Périodiquement, l'obturateur équipant l'orifice 51 est actionné et le bain en fusion s'écoule hors de la chambre de fusion 3 pour tomber dans le bac de trempe 52 où il se solidifie et se fragmente. Les produits de la vitrification sont sortis du bac de trempe 52 par le convoyeur 54.

Durant la combustion et le dégazage des déchets dans la chambre de gazéification 1, les gaz issus de celle-ci et ceux issus de la chambre de fusion 3 sont aspirés par le ventilateur 60 dans la chambre de post-combustion des gaz 2, maintenue à haute température (850 à 1200°C), éventuellement au moyen du brûleur d'appoint 41. A l'entrée de la chambre de post-combustion des gaz 2, les gaz reçoivent un apport d'air secondaire provoquant leur oxydation complète. Le débit d'air secondaire injecté dans la chambre 2 est régulé en permanence par les moyens de régulation en mesurant la teneur résiduelle des gaz en oxygène et en monoxyde de carbone à la sortie de cette chambre 2. Le temps de séjour des gaz dans la chambre 2 est supérieur à 2 secondes. La forte turbulence régnant dans la chambre de post-combusion des gaz 2 permet la destruction des particules de suie, du monoxyde de carbone et la dissociation des hydrocarbures et des composés chlorés.

La haute température régnant dans la chambre de fusion 3 assure la combustion de la quasi-totalité des imbrûlés contenus dans les scories déversées dans cette chambre, ce qui permet d'admettre un taux d'imbrûlés dans les scories compris entre 3 et 10 %, donc un temps de séjour assez court des déchets dans la chambre de gazéification 1 (environ 30 minutes) et une charge surfacique de déchets importante (150 kg/m²) dans celle-ci.

L'action conjuguée de la chambre de gazéification 1 et de la chambre de fusion 3 permet d'obtenir un taux d'imbrûlés inférieur à 0,1 % dans les produits de vitrification en consommant moins d'énergie que ce qui serait nécessaire pour obtenir le même taux d'imbrûlés au moyen d'une seule chambre de gazéification 1 (dans laquelle les déchets séjourneraient plus longtemps) ou au moyen d'une chambre de fusion (de grand volume) où ils seraient soumis directement à l'action d'une torche à plasma (plus puissante). La teneur en oxydes d'azote dans les gaz sortant du dispositif augmentant avec la puissance de la torche utilisée, cette teneur est réduite dans l'invention par rapport à celle qui résulterait de la vitrification directe des déchets dans une chambre de fusion de grande dimension équipée d'une torche plus puissante. Dans la pratique, les imbrûlés sont à l'état de traces dans les produits de vitrification

En outre, le taux d'imbrûlés relativement élevé admissible en sortie de la chambre de gazéification 1 permet de réduire la quantité d'air en excès injecté dans cette chambre à environ 80 % de la valeur théorique nécessaire pour assurer la combustion des déchets avec moins de 3 % d'imbrûlés résiduels, au lieu de la valeur de 150 % généralement adoptée dans les incinérateurs connus. Le débit total des gaz quittant le dispositif de traitement est ainsi plus faible que celui quittant les installations connues, et l'on peut en conséquence avantageusement utiliser des installations de traitement de ces gaz et/ou de récupération de chaleur de taille réduite et plus performantes pour un coût équivalent.

Finalement, le dispositif de traitement conforme à l'invention permet de détruire des déchets hospitaliers en les transformant en produits de vitrification inertes et assure, notamment par un bon contrôle de la combustion dans la chambre de gazéification et par la faible puissance de la torche utilisée, l'absence d'imbrûlés (suies, hydrocarbures, monoxyde de carbone, ...) dans les gaz sortant du dispositif. En outre, la destruction des déchets se fait avec un rendement énergétique avantageux compte tenu de la faible puissance de la torche utilisée et du taux d'imbrûlés relativement élevé admissible dans les scories.

Bien entendu, le dispositif conforme à l'invention s'applique au traitement de déchets autres que les déchets hospitaliers.

La présente invention n'est pas limitée à l'exemple de réalisation décrit. On peut ainsi proposer par exemple, sans sortir du cadre de celle-ci, de remplacer la chambre de gazéification 1 à soles étagées par une chambre de gazéification d'un autre type permettant d'assurer un dégazage et un bon contrôle de la combustion, par exemple une chambre de gazéification rotative inclinée vers le bas.

## Revendications

1. Dispositif de traitement de déchets, notamment de déchets hospitaliers, comportant une chambre de gazéification (1) où sont introduits les déchets pour y subir un dégazage et une combustion, une chambre de post-combustion (2) des gaz issus de la chambre de gazéification et une chambre de fusion (3) où les scories provenant de la chambre de gazéification (1) sont exposées à une haute température en vue de leur vitrification, des moyens pour injecter de l'air dans la chambre de gazéification (1) et dans la chambre de post-combustion des gaz (2), la chambre de gazéification (1) surplombant la chambre de fusion (3) de sorte que les scories descendent par gravité dans cette dernière pour être soumises à la fusion, caractérisé en ce qu'il comporte des moyens pour mesurer la température et la pression dans la chambre de gazéification (1) et réguler en fonction de la température et de la pression mesurées le débit d'air injecté dans la chambre de gazéification (1) de sorte que celui-ci soit adapté au pouvoir calorifique des déchets en cours de traitement et que le taux d'imbrûlés des scories introduites dans la chambre de fusion soit compris entre 3 % et 10 %.

2. Dispositif de traitement de déchets selon la revendication 1, caractérisé en ce que le débit d'air injecté dans la chambre de gazéification (1) et le débit d'air injecté dans la chambre de post-combustion sont régulés de manière à ce que le débit de gaz quittant le dispositif vers des installations de traitement des gaz et/ou de récupération de chaleur est sensiblement constant.

3. Dispositif de traitement de déchets selon l'une des revendications 1 et 2, caractérisé en ce que la chambre de gazéification est constituée par une chambre rotative inclinée vers le bas.

4. Dispositif de traitement de déchets selon l'une des revendications 1 et 2, caractérisé en ce que la chambre de gazéification comporte sur sa surface interne inférieure des soles (21, 22, 23) disposées de façon étagée, sur lesquelles les déchets séjournent successivement, équipées de poussoirs d'avancement des déchets.

5. Dispositif de traitement de déchets selon l'une des revendications 1 à 4, caractérisé en ce que la température de la chambre de fusion (3) est de 1600°C, de préférence obtenue à l'aide d'une torche à plasma (50).

6. Dispositif de traitement de déchets selon l'une des revendications 1 à 5, caractérisé en ce que la chambre de fusion (3) comporte un orifice (51) équipé d'un obturateur pour permettre l'évacuation du bain de fusion vers un bac de trempe.

7. Dispositif de traitement de déchets selon l'une des revendications 1 à 6, caractérisé en ce que la température de la chambre de post-combustion des gaz (2) est comprise entre 850 et 1200°C.

8. Dispositif de traitement de déchets selon l'une des revendications 1 à 7, caractérisé en ce que l'air injecté dans les chambres de gazéification (1) et de post-combustion des gaz (2) est produit au moyen d'un ventilateur unique.

9. Dispositif de traitement de déchets selon l'une des revendications 1 à 8, caractérisé en ce que le débit d'air primaire injecté dans la chambre de gazéification est compris entre 30 et 50 % du débit total d'air injecté et le débit d'air secondaire injecté dans la chambre de post-combustion est compris entre 50 et 70 % du débit total d'air injecté, le débit d'air secondaire étant maximal au début du traitement des déchets et le débit d'air primaire maximal en fin de dégazage des déchets.

10. Dispositif de traitement de déchets selon l'une des revendications 1 à 9, caractérisé en ce que le débit total d'air injecté correspond à un excès d'air de 80 % par rapport à la quantité théorique nécessaire pour assurer une combustion des déchets avec moins de 3 % d'imbrûlés résiduels.

11. Dispositif de traitement de déchets selon l'une des revendications 1 à 10, caractérisé en ce que le taux d'imbrûlés des produits de vitrification est inférieur à 0,1 %.

12. Dispositif de traitement de déchets selon l'une des revendications 1 à 11, caractérisé en ce que la température des scories lorsqu'elles sont introduites dans la chambre de fusion (3) est supérieure à 800°C.

## Patentansprüche

1. Vorrichtung zum Behandeln von Abfällen, insbesondere von Krankenhausabfällen, mit einer Entgasungskammer (1), in die die Abfälle eingeführt werden, um einer Entgasung und einer Verbrennung unterworfen zu werden, mit einer Nachverbrennungskammer (2) für die aus der Entgasungskammer austretenden Gase und einer Schmelzkammer (3), in der die aus der Entgasungskammer (1) austretenden Schlacken einer hohen Temperatur in Hinblick auf ihre Einglasung unterworfen werden, sowie Einrichtungen zum Einblasen von Luft in die Entgasungskammer (1) und in die Gasnachverbrennungskammer (2), wobei die Entgasungskammer (1) über die Schmelzkammer (3) derart hinausragt, daß die Schlacken durch das Eigengewicht in die letztere herabfallen, um einem Schmelzen unterworfen zu werden, dadurch gekennzeichnet, daß sie Einrichtungen zum Messen der Temperatur und des Druckes in der Entgasungskammer (1) und zum Regulieren des Durchsatzes der in die Entgasungskammer (1) eingeblasenen Luft in Abhängigkeit von der gemessenen Temperatur und des gemessenen Druckes aufweist, derart, dass dieser Durchsatz an den Brennwert der Abfälle im Verlauf der Behandlung angepaßt ist und der Anteil der unverbrannten Rückstände der in die Schmelzkammer eingeführten Schlacken zwischen 3 % und 10 % liegt.

2. Vorrichtung zum Behandeln von Abfällen nach Anspruch 1, dadurch gekennzeichnet, daß der Durchsatz der in die Entgasungskammer (1) eingeblasenen Luft und der Durchsatz der in die Nachverbrennungskammer eingeblasenen Luft derart reguliert werden, daß der Durchsatz des Gases, das die Vorrichtung zu Gasbehandlungseinrichtungen und/oder Wärmerückgewinnungseinrichtungen verläßt, im wesentlichen konstant ist.

3. Vorrichtung zum Behandeln von Abfällen nach einem der Ansprüche 1 und 2, dadurch gekennzeichnet, daß die Entgasungskammer aus einer nach unten geneigten Drehkammer besteht.

4. Vorrichtung zum Behandeln von Abfällen nach einem der Ansprüche 1 und 2, dadurch gekennzeichnet, daß die Entgasungskammer an ihrer unteren Innenfläche Schwellen (21, 22, 23) aufweist, die stufenförmig angeordnet sind, auf denen die Abfälle der Reihe nach verweilen und die mit Schubeinrichtungen zum Vorbewegen der Abfälle versehen sind.

5. Vorrichtung zum Behandeln von Abfällen nach einem der Ansprüche 1 bis 4, dadurch gekennzeichnet, daß die Temperatur der Schmelzkammer (3) bei 1600°C liegt, was vorzugsweise mittels eines Plasmabrenners (50) erzielt wird.

6. Vorrichtung zum Behandeln von Abfällen nach einem der Ansprüche 1 bis 5, dadurch gekennzeichnet, daß die Schmelzkammer (3) eine Öffnung (51) aufweist, die mit einem Verschluß ausgerüstet ist, um die Schmelze zu einem Abschreckbehälter abführen zu können.

7. Vorrichtung zum Behandeln von Abfällen nach einem der Ansprüche 1 bis 6, dadurch gekennzeichnet, daß die Temperatur der Gasnachverbrennungskammer (2) zwischen 850 und 1200°C liegt.

8. Vorrichtung zum Behandeln von Abfällen nach einem der Ansprüche 1 bis 7, dadurch gekennzeichnet, daß die in die Entgasungskammer (1) und in die Gasnachverbrennungskammer (2) eingeblasene Luft mittels eines einzigen Gebläses erzeugt wird.

9. Vorrichtung zum Behandeln von Abfällen nach einem der Ansprüche 1 bis 8, dadurch gekennzeichnet, daß der Durchsatz der in die Entgasungskammer eingeblasenen Primärluft zwischen 30 und 50 % des gesamten Durchsatzes der eingeblasenen Luft liegt, und daß der Durchsatz der in die Nachverbrennungskammer eingeblasenen Sekundärluft zwischen 50 und 70 % des gesamten Durchsatzes der eingeblasenen Luft liegt, wobei der Durchsatz der Sekundärluft am Anfang der Behandlung der Abfälle maximal ist und der Durchsatz der Primärluft am Ende der Entgasung der Abfälle maximal ist.

10. Vorrichtung zum Behandeln von Abfällen nach einem der Ansprüche 1 bis 9, dadurch gekennzeichnet, daß der Gesamtdurchsatz der eingeblasenen Luft einem Luftüberschuß von 80 % bezüglich der Menge entspricht, die theoretisch zum Erzielen einer Verbrennung der Abfälle mit weniger als 3 % unverbrannten Rückständen notwendig ist.

11. Vorrichtung zum Behandeln von Abfällen nach einem der Ansprüche 1 bis 10, dadurch gekennzeichnet, daß der Anteil an unverbrannten Produkten der Einglasung unter 0,1 % liegt.

12. Vorrichtung zum Behandeln von Abfällen nach einem der Ansprüche 1 bis 11, dadurch gekennzeichnet, daß die Temperatur der Schlacke beim Einführen in die Schmelzkammer (3) über 800°C liegt.

## Claims

1. Apparatus for processing waste, in particular hospital waste, the apparatus comprising a gasification chamber (1) into which the waste is inserted in order to be subjected to degassing and to combustion, a post-combustion chamber (2) for the gases coming from the gasification chamber, and a melting chamber (3) in which the slag coming from the gasification chamber (1) is subjected to high temperature for vitrification purposes, means for injecting air into the gasification chamber (1) and into the gas post-combustion chamber (2), the gasification chamber (1) being above the melting chamber (3) so that the slag moves down into the latter under gravity to be subjected to melting, the apparatus being characterized in that it includes means for measuring the temperature and the pressure in the gasification chamber (1) and for regulating the flow rate of air injected into the gasification chamber (1) as a function of the measured temperature and pressure so that the flow rate matches the calorific power of the waste being processed and so that the content of unburned matter in the slag inserted into the melting chamber lies in the range 3% to 10%.

2. Apparatus for processing waste according to claim 1, characterized in that the flow rate of air injected into the gasification chamber (1) and the flow rate of air injected into the post-combustion chamber are regulated so that the flow rate of gas leaving the apparatus for feeding to installations for processing gases and/or recovering heat is substantially constant.

3. Apparatus for processing waste according to claim 1 or 2, characterized in that the gasification chamber is constituted by a downwardly sloping rotary chamber.

4. Apparatus for processing waste according to claim 1 or 2, characterized in that the gasification chamber includes soleplates (21, 22, 23) on its bottom inside surface that are disposed in a staircase configuration and on which waste spends time in succession, the soleplates being fitted with waste advancing pushers.

5. Apparatus for processing waste according to any one of claims 1 to 4, characterized in that the temperature of the melting chamber (3) is 1600°C, preferably obtained by means of a plasma torch (50).

6. Apparatus for processing waste according to any one of claims 1 to 5, characterized in that the melting chamber (3) includes an orifice (51) fitted with a shutter for enabling the melt to be discharged to a quenching tank.

7. Apparatus for processing waste according to any one of claims 1 to 6, characterized in that the temperature of the gas post-combustion chamber (2) lies in the range 850°C to 1200°C.

8. Apparatus for processing waste according to any one of claims 1 to 7, characterized in that the air injected into the gasification chamber (1) and into the gas post-combustion chamber (2) is obtained from a single fan.

9. Apparatus for processing waste according to any one of claims 1 to 8, characterized in that the flow rate of primary air injected into the gasification chamber lies in the range 30% to 50% of the total injected air flow rate, and the flow rate of secondary air injected into the post-combustion chamber lies in the range 50% to 70% of the total injected air flow rate, the secondary air flow rate being at a maximum at the beginning of waste processing and the primary air flow rate being at a maximum at the end of waste degassing.

10. Apparatus for processing waste according to any one of claims 1 to 9, characterized in that the total injected air low rate corresponds to air being 80% in excess over the theoretical quantity required for ensuring combustion of the waste, with less than 3% of residual unburned matter.

11. Apparatus for processing waste according to any one of claims 1 to 10, characterized in that the unburned matter content of the vitrification products is less than 0.1%.

12. Apparatus for processing waste according to any one of claims 1 to 11, characterized in that the temperature of the slag when being inserted into the melting chamber (3) is greater than 800°C.
